# EUROPEAN PATENT SPECIFICATION

(11) **EP 2 615 384 B1**
(45) Date of publication and mention of the grant of the patent: **12.06.2019**
(21) Application number: 11823266.9
(22) Date of filing: 09.09.2011
(51) Int. Cl.: F24D 3/00, F24D 3/18, F25B 25/00, F25B 30/02, F24D 19/10, F25B 9/00

(54) **HEAT MEDIUM CIRCULATION TYPE HEAT PUMP HEATER**
DURCHLAUFERHITZER FÜR EINE WÄRMEMEDIENPUMPE
AÉROTHERME DE POMPE À CHALEUR DU TYPE À CIRCULATION DE VÉHICULE THERMIQUE

(30) Priority: 10.09.2010 JP 2010202949
(43) Date of publication of application: 17.07.2013
(73) Proprietor: Panasonic Intellectual Property Management Co., Ltd., Osaka-shi, Osaka 540-6207 (JP)
(72) Inventor: OKAICHI, Atsuo, Osaka-shi, Osaka 540-6207 (JP); KOSUDA, Osamu, Osaka-shi, Osaka 540-6207 (JP); OKUMURA, Takuya, Osaka-shi, Osaka 540-6207 (JP)
(74) Representative: Eisenführ Speiser
(86) International application number: PCT/JP2011/005078
(87) International publication number: WO 2012/032787

(56) References cited:
- EP-A1- 1 162 419
- EP-A2- 1 707 886
- EP-A2- 2 213 710
- GB-A- 2 052 712
- JP-A- 62 297 638
- JP-A- 2001 124 349
- JP-A- 2010 008 036
- JP-A- 2010 008 036
- JP-A- 2010 065 930
- JP-A- 2010 065 930
- US-A1- 2005 193 752

## Description

### TECHNICAL FIELD

The present invention relates to a heat medium circulation type heater using a heat pump as a heat source.

### BACKGROUND ART

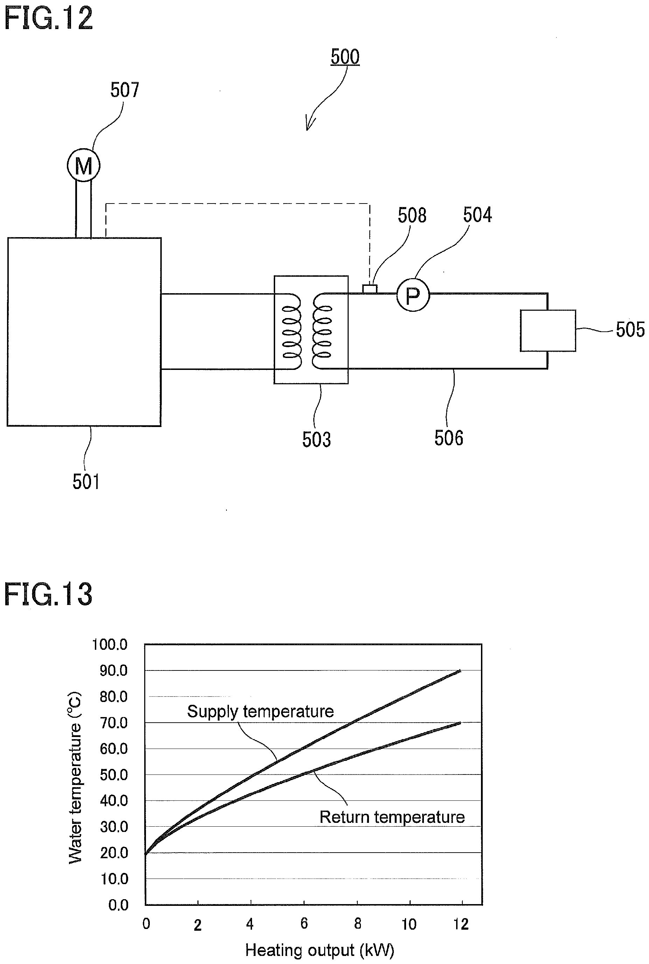

As a heat medium circulation type heater, a hot water heater using a heat pump as a heat source is known. Fig. 12 is a configuration diagram of a hot water circulation type heat pump heater described in Patent Literature 1. A heat pump heater 500 includes an outdoor unit 501, a heat exchanger (condenser) 503, a radiator 505, a pump 504, a thermistor 507, and a thermistor 508. The radiator 505 is connected to the heat exchanger 503 by a hot water pipe 506. The hot water pipe 506 is provided with the pump 504. The thermistors 507 and 508 detect an outside air temperature and a hot water temperature, respectively.

When the outside air temperature is high, the load on the radiator 505 is small. Therefore, a compressor of the outdoor unit 501 is controlled so that relatively low temperature hot water is supplied to the radiator 505 through the hot water pipe 506. With this control, a condensation temperature in the heat pump cycle can be reduced. When the condensation temperature drops, a difference between a condensation pressure and an evaporation pressure is reduced, and thus the compression work of the compressor is reduced. As a result, an input (power consumption) of the heat pump heater 500 is reduced, and the appliance efficiency (the coefficient of performance of the heat pump cycle) is enhanced.

In Patent Literature 2 there is provided a heat-pump type heating apparatus, having: a heat-pump refrigerant circuit, within which are connected a compressor, a heat exchanger for conducting heat-exchange between a refrigerant compressed within said compressor and a fluid, a decompressing apparatus for decompressing the refrigerant conducted with the heat-exchange, an evaporator for conducting heat-exchange between the decompressed refrigerant and air, through refrigerant conduits provided therebetween. The heat-pump type heating apparatus further comprising a heating circuit, within which are connected a circulation pump for sending said fluid to said heat-exchanger, a heating terminal, having a fluid inlet, into which the fluid heated within said water-refrigerant heat-exchanger flows in, and a fluid outlet, from which that fluid flows out, for radiating heat of that fluid, through conduits provided therebetween. The heat-pump type heating apparatus further comprising an operation controller means for operating and controlling equipment of said heat-pump refrigerant circuit and said heating circuits; and a circulation flow-rate controlling means for controlling said circulation pump based on the fluid inlet temperature and fluid outlet temperature of said heating terminal.

A further operating control based on return temperature regulation is known from Patent Literature 3 in which when determination means determine that the heating load has decreased, control means start controlling the return temperature regulation means in such a way as to lower the return temperature and then start controlling the ongoing temperature regulation means in such a way as to lower the ongoing temperature.

In Patent Literature 4 it is described that when determination means determine that the heating load is smaller than a predetermined value, the control means control at least one of the circulating pump and the going temperature control means so that the return temperature of the hot water to be returned from the heating terminal to the hot water storage tank is lowered.

### CITATION LIST

### Patent Literature

Patent Literature 1 JP 2001-124349 A
Patent Literature 2 EP 1 707 886 A2
Patent Literature 3 JP 2010 008036
Patent Literature 4 JP 2010 065930)

### SUMMARY OF INVENTION

### Technical Problem

On the other hand, when the load on the radiator 505 increases, the compressor of the outdoor unit 501 is controlled so that relatively high temperature hot water is supplied to the radiator 505 through the hot water pipe 506. Then, the temperature of hot water returned to the heat exchanger 503 (i.e., a return temperature) rises accordingly. Specifically, as shown in Fig. 13, the return temperature rises as the temperature of hot water to be supplied to the radiator 505 (i.e., a supply temperature) rises.

When the return temperature rises, the temperature of a refrigerant at the outlet of the heat exchanger 503 rises, and thus the enthalpy h_out of the refrigerant increases. Therefore, a difference Δh (= h_in - h_out) between the enthalpy h_in of the refrigerant at the inlet of the heat exchanger 503 and the enthalpy h_out of the refrigerant at the outlet of the heat exchanger 503 is reduced. This means that the coefficient of performance of the heat pump cycle decreases. Thus, a conventional hot water circulation type heat pump heater has a problem that it becomes less efficient as the heating output is increased. In particular, a heat pump cycle operating at a pressure equal to or higher than the critical pressure has a problem that an enthalpy difference Δh decreases rapidly when the return temperature exceeds the critical temperature.

It is an object of the present invention to improve the efficiency of a heat medium circulation type heat pump heater.

### Solution to Problem

The present invention provides a heat medium circulation type heat pump heater including: a heat pump having a compressor, a radiator, an expansion mechanism, and an evaporator; a heat transfer circuit in which a heat medium heated by the heat pump circulates; a heat utilization device connected to the heat transfer circuit; a flow regulator provided in the heat transfer circuit to change a circulation rate of the heat medium; and a controller configured to control the heat pump to allow the heat utilization device to produce a required heating output, and to control the flow regulator to prevent a return temperature from rising with a rise in a supply temperature, the return temperature being a temperature of the heat medium returned from the heat transfer circuit to the heat pump, and the supply temperature being a temperature of the heat medium heated by the heat pump and fed to the heat transfer circuit.

### Advantageous Effects of Invention

According to the present invention, the flow regulator is controlled to prevent the return temperature from rising with a rise in the supply temperature. With this control, a rise in the refrigerant temperature at the outlet of the radiator can be suppressed even if the supply temperature rises. Accordingly, the heat pump heater of the present invention can achieve a high coefficient of performance (COP) even when the supply temperature is raised to increase a heating output.

### BRIEF DESCRIPTION OF DRAWINGS

Fig. 1 is a configuration diagram of a hot water circulation type heat pump heater in an embodiment of the present invention.
Fig. 2 is a control flow chart of a normal operation of the heat pump heater shown in Fig. 1.
Fig. 3A is a graph showing the relationship among a supply temperature, a return temperature, and a heating output.
Fig. 3B is a graph showing the relationship between a water circulation rate and a heating output.
Fig. 4 is a configuration diagram of a hot water circulation type heat pump heater according to a first modification.
Fig. 5 is a configuration diagram of a hot water circulation type heat pump heater according to a second modification.
Fig. 6 is a configuration diagram of a hot water circulation type heat pump heater according to a third modification.
Fig. 7 is a correlation diagram of a refrigerant temperature and a water temperature in a condenser.
Fig. 8 is a configuration diagram of a hot water circulation type heat pump heater according to a fourth modification.
Fig. 9 is a configuration diagram of a hot water circulation type heat pump heater according to a fifth modification.
Fig. 10 shows Mollier diagrams obtained when a control of the present invention and a conventional control are performed in a heat pump heater using R410A as a refrigerant.
Fig. 11 shows Mollier diagrams obtained when a control of the present invention and a conventional control are performed in a heat pump heater using CO₂ as a refrigerant.
Fig. 12 is a configuration diagram of a conventional hot water circulation type heat pump heater.
Fig. 13 is a graph showing the relationship between a heating output and water temperatures in a conventional heat pump heater.

### DESCRIPTION OF EMBODIMENTS

Hereinafter, embodiments of the present invention will be described with reference to the drawings. The present invention is not limited by the following embodiments.

### (Configuration of Heat Pump Heater)

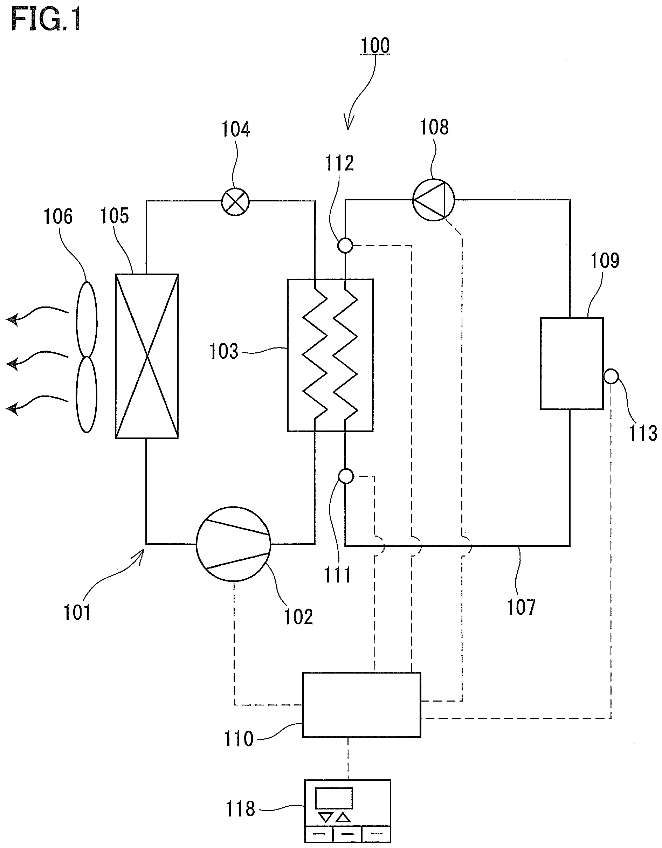

As shown in Fig. 1, a heat pump heater 100 of the present embodiment includes a heat pump 101, a heat transfer circuit 107, an inverter pump 108, a heat utilization device 109, a controller 110, a first temperature sensor 111, and a second temperature sensor 112. A heat medium in the heat transfer circuit 107 is heated by the heat pump 101, and the heated heat medium is supplied to the heat utilization device 109 as a heat utilization device. Thereby, a heating effect is exerted around the heat utilization device 109. The heat medium releases heat in the heat utilization device 109, and then is heated again in the heat pump 101. That is, the heat pump heater 100 is configured as a heat medium circulation type heat pump heater. The heat medium is typically water, and other fluids such as oil also can be used.

The heat pump 101 has a compressor 102, a radiator 103 (condenser), an expansion mechanism 104, and an evaporator 105. These components are connected in series in this order by refrigerant pipes to form a refrigerant circuit. The compressor 102 is typically a positive displacement compressor. Examples of positive displacement compressors include a rotary compressor, a scroll compressor, a screw compressor, etc. The radiator 103 is typically constituted by a water-refrigerant heat exchanger. In the radiator 103, heat is exchanged between a refrigerant in the refrigerant circuit and water in the heat transfer circuit 107, so that the heat of the refrigerant is fed to the water. The evaporator 105 is typically constituted by an air-refrigerant heat exchanger. The evaporator 105 is provided with a fan 106 for promoting heat exchange between the refrigerant and air. The expansion mechanism 104 is typically an expansion valve, and may be constituted by a positive displacement expander capable of recovering power from the refrigerant.

The refrigerant circuit of the heat pump 101 is filled with a refrigerant such as a fluorine-containing refrigerant, a supercritical refrigerant, or the like. Examples of the fluorine-containing refrigerant include R22, R32, R410A, R407C, R134a, R1234yf, etc. An example of the supercritical refrigerant is carbon dioxide. In the case where relatively low temperature (for example, 55°C or lower) hot water is supplied to the heat utilization device 109, fluorine-containing refrigerants such as R410A and R22 can be suitably used. When the temperature of the hot water is low, the condensation pressure of the refrigerant can be reduced. This is effective in reducing the compression work of the compressor 102.

In the case where relatively high temperature (for example, 90°C or lower, or 75°C or lower) hot water is supplied to the heat utilization device 109, a cycle using carbon dioxide, a cycle using R407C, a cascade cycle of a low temperature cycle using R410A and a high temperature cycle using R134a, or a cascade cycle of a low temperature cycle using R32 and a high temperature cycle using R1234yf can be employed. The cycle using carbon dioxide has various advantages such as a low GWP (Global Warming Potential), ease of producing high temperature hot water, and no need of refrigerant recovery at the time of disposal of a system.

The heat transfer circuit 107 is typically constituted by pipes. Water (hot water) heated in the radiator 103 of the heat pump 101 circulates through the heat transfer circuit 107. The inverter pump 108 is provided in the heat transfer circuit 107, and serves as a flow regulator for changing the circulation rate of the water. The "circulation rate" indicates the flow rate of water passing through the heat utilization device 109 per unit time. The heat utilization device 109 is connected to the heat transfer circuit 107 to heat a room. Examples of the heat utilization device 109 include a room-mounted heat exchanger, a floorboard with a built-in heat radiation pipe, etc.

The controller 110 controls the rotational speed of the inverter pump 108 to change the circulation rate of water. The controller 110 also controls the heat pump 100 (the compressor 102, the expansion mechanism 104 and the fan 106) so that a required heating output is produced in the heat utilization device 109. As the controller 110, a DSP (Digital Signal Processor) including an A/D conversion circuit, an input/output circuit, an arithmetic circuit, a memory device, etc. can be used. A program for controlling the inverter pump 108 and the heat pump 101 is stored in the controller 110. Furthermore, an operation unit 118 for receiving an input from a user is connected to the controller 110. The operation unit 118 includes an operation start switch, an operation mode selector, a room temperature selector, etc. A preset temperature (target room temperature) input with the room temperature selector of the operation unit 118 is stored in the controller 110. A required heating output can be determined based on a difference between a current room temperature and a preset temperature. An outside air temperature is sometimes considered to determine the required heating output. The "heating output" means the heating capability of the heat utilization device 109.

The first temperature sensor 111 (supply temperature sensor) detects a supply temperature, which is the temperature of water heated by the heat pump 101 and fed to the heat transfer circuit 107, and outputs a signal corresponding to the detected supply temperature. The supply temperature is the temperature of the water before releasing heat in the heat utilization device 109.

The second temperature sensor 112 (return temperature sensor) detects a return temperature, which is the temperature of the water returned from the heat transfer circuit 107 to the heat pump 101, and outputs a signal corresponding to the detected return temperature. The return temperature is the temperature of the water after releasing heat in the heat utilization device 109. A third temperature sensor 113 (ambient temperature sensor) for detecting the ambient temperature of the heat utilization device 109 is provided. The "ambient temperature" is, to be precise, a room temperature. The temperature sensors 111, 112 and 113 are each usually constituted by a device such as a thermistor or a thermocouple. The temperature sensors 111, 112 and 113 are connected to the controller 110 to transmit output signals to the controller 110. This also applies to some modifications described later.

### (Operation of Heat Pump Heater)

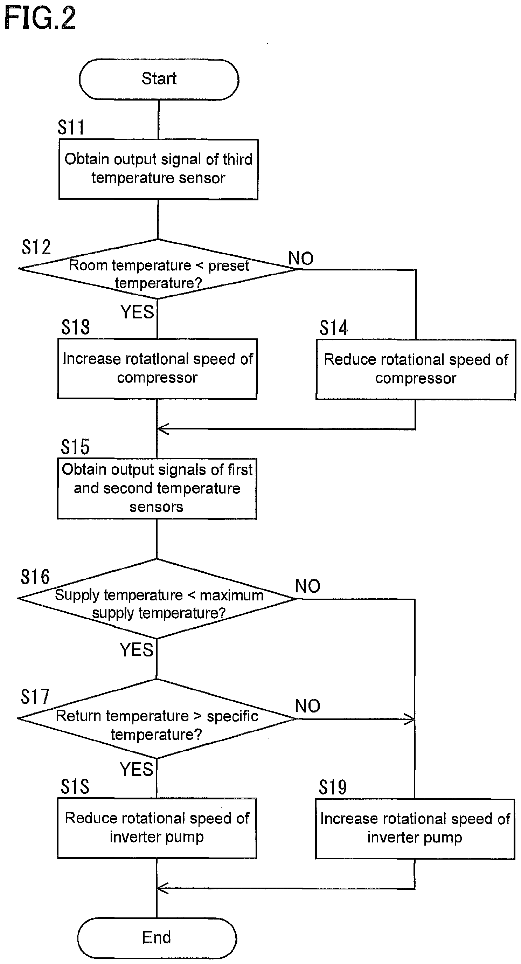

Fig. 2 is a control flow chart of a normal operation of the heat pump heater shown in Fig. 1. Each process shown in Fig. 2 can be performed on a regular basis by the controller 110.

When the operation start switch of the operation unit 118 is turned on, the following initial operation may be performed before the normal operation shown in Fig. 2. First, when the operation start switch is turned on, an appropriate initial heating output is determined based on a room temperature, an outside air temperature, and a preset temperature at that time. Then, the rotational speed of the compressor 102, in other words, the heat supply capability of the heat pump 101 is determined so that the determined initial heating output is produced in the heat utilization device 109. When a given time has elapsed from the start of the operation or the room temperature has reached the preset temperature, the heater enters into the normal operation.

As shown in Fig. 2, in Step S11, an output signal of the third temperature sensor 113 is obtained, and the room temperature is identified by the output signal of the third temperature sensor 113. Next, the heat pump 101 is controlled so that a required heating output is produced in the heat utilization device 109. Specifically, in Step S12, whether or not the room temperature is lower than the preset temperature is determined. When the room temperature is lower than the preset temperature, the rotational speed of the compressor 102 is increased to increase the heating output (Step S13). When the room temperature is equal to or higher than the preset temperature, the rotational speed of the compressor 102 is reduced to reduce the heating output (Step S14).

When the rotational speed of the compressor 102 is increased, the refrigerant circulation rate in the heat pump 101 increases. As a result, both the heat absorbing capability of the evaporator 105 and the heating capability of the radiator 103 increase. When the heating capability of the radiator 103 increases, the supply temperature and the return temperature rise in the heat transfer circuit 107. When the rotational speed of the compressor 102 is reduced, the refrigerant circulation rate in the heat pump 101 decreases. As a result, both the heat absorbing capability of the evaporator 105 and the heating capability of the radiator 103 decrease. When the heating capability of the radiator 103 decreases, the supply temperature and the return temperature drop in the heat transfer circuit 107.

The operation unit 118 may be provided with a heating output selector so that a user can set an arbitrary heating output. Also in this case, the heat pump 101 is controlled so that the heating output set by the user can be produced.

Next, in Step S15, an output signal of the first temperature sensor 111 and an output signal of the second temperature sensor 122 are obtained. The supply temperature is identified by the output signal of the first temperature sensor 111. In Step S16, whether or not the supply temperature is lower than a predetermined maximum supply temperature is determined.

As stated herein, the "maximum supply temperature" is a temperature determined based on the type of the refrigerant used for the heat pump 101, the type of the heat medium used for the heat transfer circuit 107, the specifications of the heat pump heater 100, etc. For example, when the refrigerant is carbon dioxide and the heat medium is water, the maximum supply temperature can be set to 90°C. The inverter pump 108 is controlled so that the supply temperature is maintained at 90°C or lower even if any heating output is requested.

When the supply temperature is lower than the maximum supply temperature, the return temperature is identified by the previously obtained output signal of the second temperature sensor 112. Then, the inverter pump 108 is controlled so that the return temperature approaches (preferably, coincides with) a specific temperature determined based on the detection result of the third temperature sensor 113.

In view of the efficiency of the heat pump 101, a low return temperature is preferred. However, the return temperature cannot be reduced to the room temperature even if any control is performed. Therefore, an ideal return temperature in a range that can be achieved relatively easily by the control of the inverter pump 108 can be determined as a "specific temperature". In the present embodiment, a temperature obtained by adding a predetermined temperature difference ΔT to a room temperature is regarded as a "specific temperature". The predetermined temperature difference ΔT may be, for example, a constant value within the range of 1 to 5°C, or a value determined to correspond to a room temperature on a one-to-one basis.

In Step S17, whether or not the return temperature is higher than the specific temperature (= room temperature + ΔT) is determined. When the return temperature is higher than the specific temperature, the rotational speed of the inverter pump 108 is reduced to reduce the water circulation rate (Step S18). When the water circulation rate is reduced, the quantity of heat that a unit volume of water loses in the heat utilization device 109 increases, and thus the return temperature drops. When the water circulation rate decreases and the return temperature drops, the quantity of heat that a unit volume of water receives from the refrigerant in the radiator 103 of the heat pump 101 increases. As a result, the supply temperature rises.

On the other hand, when the return temperature is equal to or lower than the specific temperature, the rotational speed of the inverter pump 108 is increased to increase the water circulation rate (Step S19). When the water circulation rate is increased, the quantity of heat that a unit volume of water loses in the heat utilization device 109 decreases, and thus the return temperature rises. When the water circulation rate increases and the return temperature rises, the quantity of heat that a unit volume of water receives from the refrigerant in the radiator 103 of the heat pump 101 decreases. As a result, the supply temperature drops.

As shown in Steps S16 to S19, when the supply temperature is lower than the maximum supply temperature, a rise in the return temperature is prevented by controlling the inverter pump 108 so as to reduce the water circulation rate. A drop in the return temperature is prevented by controlling the inverter pump 108 so as to increase the water circulation rate. As a result, the return temperature is maintained at about the specific temperature (= room temperature + ΔT). A high COP can be achieved by maintaining the return temperature at the specific temperature. Furthermore, the variations in the water circulation rate are relatively small.

Since a low return temperature is favorable for the efficiency of the heat pump 101, Step S19 seems to be a useless process. However, if only the processes of Steps S17 and S18 are performed to lower the return temperature, the water circulation rate may be insufficient. If the water circulation rate is insufficient, the rotational speed of the compressor 102 may need to be increased significantly to raise the supply temperature excessively in order to obtain a required heating output, or the required heating output may not be obtained. In contrast, the addition of the process of Step S19 makes it possible to keep the water circulation rate almost constant when the supply temperature is lower than the maximum supply temperature. That is, it is possible to balance the rotational speed of the compressor 102 of the heat pump 101 and the rotational speed of the inverter pump 108 so that the heat pump 101 can be operated efficiently and that the required heating output can be obtained.

On the other hand, after the supply temperature reaches the maximum supply temperature as a result of an increase in the heating output, the following control is performed. That is, when the supply temperature is equal to or higher than the maximum supply temperature, the inverter pump 108 is controlled to maintain the supply temperature at the maximum supply temperature. The upper limit of the supply temperature is determined by the constraints such as the specifications of the heat pump 101, the type of the heat medium, etc. In the case where the heat medium is water, for example, the water should not be heated to a temperature higher than 90°C in view of safety. In the case where the refrigerant is R410A, for example, the temperature of the heat medium should be maintained up to about 55°C, from the viewpoints of the efficiency of the cycle and the physical properties of R410A. The reliability of the heat pump heater 100 can be ensured and the heat pump heater 100 can be operated at a high efficiency by maintaining the supply temperature at the maximum supply temperature.

Specifically, in Step S16, whether or not the supply temperature is lower than a predetermined maximum supply temperature is determined. When the supply temperature is equal to or higher than the maximum supply temperature, the rotational speed of the inverter pump 108 is increased in Step S19 to increase the water circulation rate. When the water circulation rate is increased, the quantity of heat that a unit volume of water loses in the heat utilization device 109 decreases, and thus the return temperature rises. When the water circulation rate increases and the return temperature rises, the quantity of heat that a unit volume of water receives from the refrigerant in the radiator 103 of the heat pump 101 decreases. As a result, the supply temperature drops.

The "preset temperature" in Step S12 may be a temperature range with a constant width (for example, a preset temperature ± 0.5°C). When the room temperature falls within the predetermined temperature range, the rotational speed of the compressor 102 can be maintained to keep the heating output at that time. This eliminates the need to adjust the rotational speed of the inverter pump 108 frequently. Likewise, the "maximum supply temperature" in Step S16 and the "specific temperature" in Step S18 may each be a temperature range with a constant width.

That is, the controller 110 may be configured to control the inverter pump 108 (flow regulator) so that a difference between a return temperature and a specific temperature that is determined based on the ambient temperature of the heat utilization device 109 falls within a predetermined range of temperature differences. Such a configuration is considered to be essentially equivalent to a control for bringing the return temperature closer to the specific temperature. The "predetermined range of temperature differences" can be set to a value enough to prevent hunting. For example, it is ± 2°C.

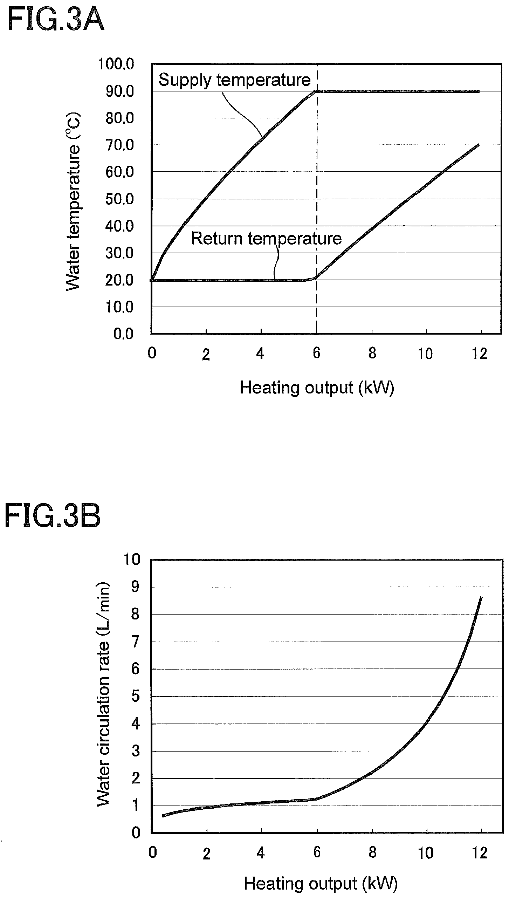

Fig. 3A is a graph showing the relationship among a supply temperature, a return temperature, and a heating output when the control of the present embodiment is performed. Fig. 3B also is a graph showing the relationship between a water circulation rate and a heating output when the control of the present embodiment is performed. These graphs are derived from the heat radiation characteristics of a commercially available radiator.

In an example shown in Fig. 3A and Fig. 3B, the maximum supply temperature is 90°C and the specific temperature (= room temperature + ΔT) is 20°C. When the supply temperature is lower than the maximum supply temperature, that is, in a range where the heating output is less than a predetermined value (less than 6 kW in the example shown in Fig. 3A and Fig. 3B), the heat pump heater 100 operates in the following manner. In the case where the heating output needs to be increased, the supply temperature is raised to increase the quantity of heat to be supplied to the heat utilization device 109 and the water circulation rate is maintained almost constant by the inverter pump 108 to maintain the return temperature at the specific temperature (i.e., to prevent the return temperature from exceeding the specific temperature). To be precise, the water circulation rate increases slowly as the heating output increases. In the case where the heating output needs to be reduced, the supply temperature is lowered to reduce the quantity of heat to be supplied to the heat utilization device 109 and the water circulation rate is maintained almost constant by the inverter pump 108 to maintain the return temperature at the specific temperature. To be precise, the water circulation rate decreases slowly as the heating output decreases. A high COP can be achieved by maintaining the return temperature at the specific temperature. Furthermore, the variations in the water circulation rate are relatively small.

With the conventional control, as shown in Fig. 13, the difference between the supply temperature and the return temperature increases monotonically with an increase in the heating output. In contrast, with the control of the present embodiment, as shown in Fig. 3A, the difference between the supply temperature and the return temperature has a peak value at a certain heating output (6 kW in Fig. 3A). The heat pump 101 and the inverter pump 108 are controlled so that the supply temperature and the return temperature have profiles shown in Fig. 3A.

When the maximum supply temperature is low, for example, 55°C, the maximum supply temperature drops to 55°C. Also when the maximum supply temperature is 55°C, the supply temperature, the return temperature, and the heating output show profiles similar to those shown in Fig. 3A and Fig. 3B.

As described above, when the supply temperature is lower than the maximum supply temperature, the inverter pump 108 is controlled based on the detection results of the first temperature sensor 111 and the second temperature sensor 112 to prevent the return temperature from rising with a rise in the supply temperature. With this control, a rise in the refrigerant temperature at the outlet of the radiator 103 of the heat pump 101 can be suppressed. Accordingly, the heat pump heater 100 can achieve a high COP even when the supply temperature is raised to increase the heating output.

Likewise, the inverter pump 108 is controlled based on the detection results of the first temperature sensor 111 and the second temperature sensor 112 to prevent the return temperature from dropping, more specifically to prevent the return temperature from dropping with a drop in the supply temperature. With this control, the return temperature can be maintained at a specific temperature even if the supply temperature drops. Furthermore, the water circulation rate can be maintained almost constant when the supply temperature is lower than the maximum supply temperature. In the example shown in Fig. 3B, when the supply temperature is lower than the maximum supply temperature, the water circulation rate is 0 to 1.2 liters per minute.

As shown in Fig. 3A and Fig. 3B, when the supply temperature is equal to or higher than the maximum supply temperature, that is, in a range where the heating output is equal to or higher than 6 kW, the heat pump heater 100 operates in the following manner. In the case where the heating output needs to be increased, the circulation rate is increased. Thereby, the quantity of heat to be supplied to the heat utilization device 109 can be increased while a rise in the supply temperature is prevented. In the case where the heating output needs to be reduced, the circulation rate is reduced. Thereby, the quantity of heat to be supplied to the heat utilization device 109 can be reduced while a drop in the supply temperature is prevented. More specifically, the inverter pump 108 is controlled so that the water circulation rate is increased or decreased with an increase or a decrease in the heating output while the supply temperature is maintained at the maximum supply temperature.

As described above, according to the present embodiment, even when the heating output is increased, the controller 110 controls the inverter pump 108 to suppress a rise in the return temperature while maintaining the supply temperature at or below the maximum supply temperature. With this control, a rise in the refrigerant temperature at the outlet of the radiator 103 can be suppressed, and therefore the COP of the heat pump cycle is increased.

The heat pump heater 100 of the present embodiment includes the inverter pump 108 as the flow regulator for changing the water circulation rate. The controller 110 increases or reduces the water circulation rate by adjusting the rotational speed of the inverter pump 108 and thereby increases or reduces the quantity of heat to be supplied to the heat utilization device 109. The water circulation rate can be changed easily with a simple configuration for controlling the frequency of a power source to be supplied to the inverter pump 108. In the case where a low water circulation rate suffices, the power consumption of the inverter pump 108 can be sufficiently reduced.

### (First Modification)

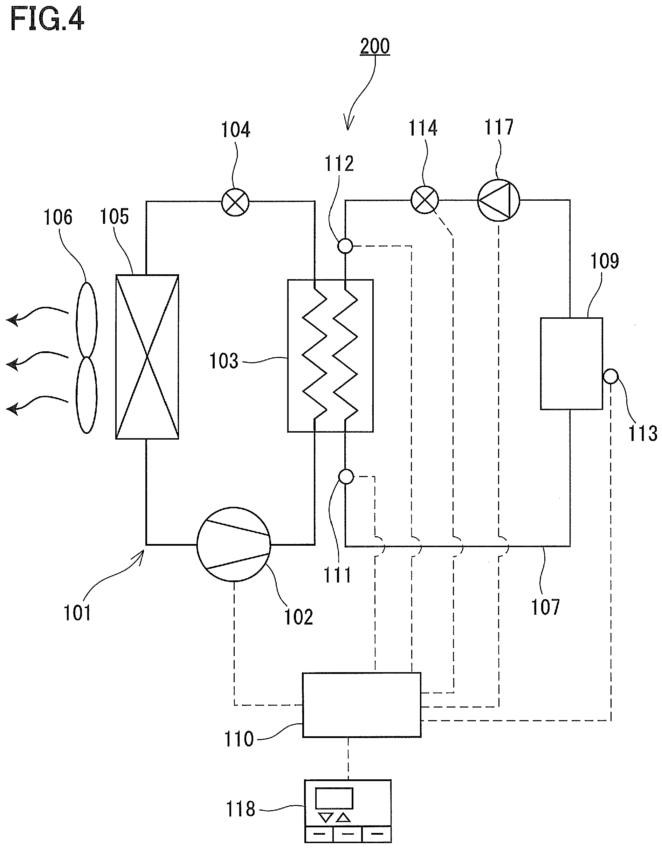

Fig. 4 is a configuration diagram of a heat pump heater according to a first modification. A heat pump heater 200 includes, as the flow regulator for changing the water circulation rate, a constant rate pump 117 and a flow control valve 114. Except for these, the first modification is the same as the embodiment described with reference to Fig. 1 to Fig. 3B.

The controller 110 increases or reduces the water circulation rate in the heat transfer circuit 107 by adjusting the opening degree of the flow control valve 114 and thereby increases or reduces the quantity of heat to be supplied to the heat utilization device 109. Specifically, in the case where the water circulation rate needs to be increased, the opening degree of the flow control valve 114 is increased. Then, the water pressure drops at the outlet of the pump 108, and a pressure rise in the pump 108 also decreases. As a result, the volumetric efficiency of the pump 108 is increased, and thus the discharge rate is increased. On the other hand, in the case where the water circulation rate needs to be reduced, the opening degree of the flow control valve 114 is reduced. Then, the water pressure rises at the outlet of the pump 108, and a pressure rise in the pump 108 also increases. As a result, the volumetric efficiency of the pump 108 is decreased, and thus the discharge rate is decreased. The pump 108 always operates at a constant rotational speed (a rotational speed that is almost equal to the frequency of the power source). According to the first modification, the water circulation rate can be regulated with simple configuration and control. Furthermore, with the use of an inexpensive constant rate pump 117, a cost reduction can be expected.

### (Second Modification)

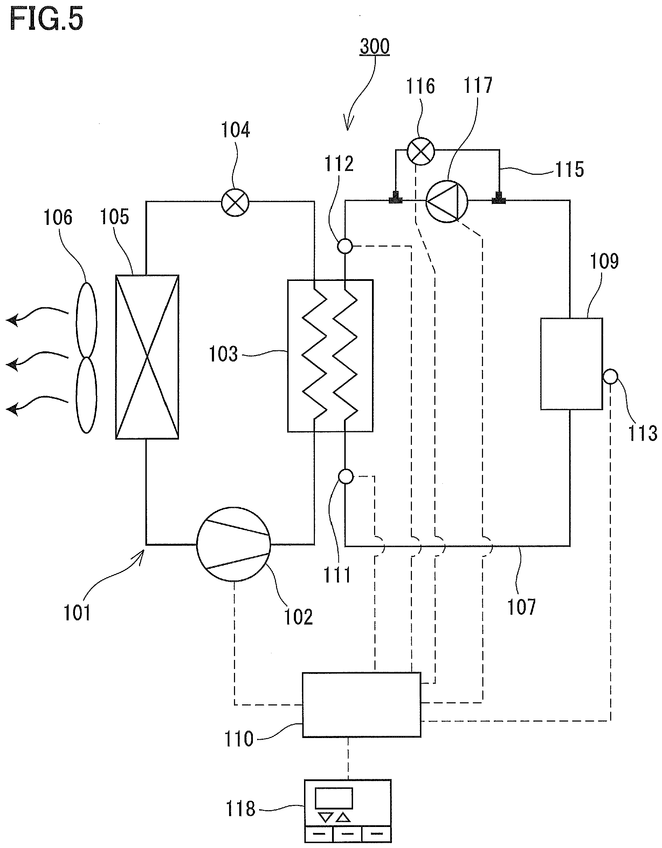

Fig. 5 is a configuration diagram of a heat pump heater according to a second modification. A heat pump heater 300 includes, as the flow regulator for changing the water circulation rate, a constant rate pump 117, a bypass circuit 115 and a bypass valve 116. Except for these, the second modification is the same as the embodiment described with reference to Fig. 1 to Fig. 3B.

The bypass circuit 115 is connected to the heat transfer circuit 107 to bypass the constant rate pump 117. The bypass valve 116 is provided in the bypass circuit 115 to regulate the water flow rate in the bypass circuit 115. The controller 110 increases or reduces the water circulation rate in the heat transfer circuit 107 by adjusting the opening degree of the bypass valve 116 and thereby increases or reduces the quantity of heat to be supplied to the heat utilization device 109. According to the second modification, the water circulation rate can be regulated with simple configuration and control. Furthermore, with the use of an inexpensive constant rate pump 117, a cost reduction can be expected.

### (Third Modification)

The heat pump heater 100 shown in Fig. 1 includes the first temperature sensor 111 for detecting the supply temperature. However, it is also possible to detect (more specifically, to estimate) the supply temperature by a method other than the method using the first temperature sensor 111. The method for detecting (or estimating) the supply temperature is not particularly limited.

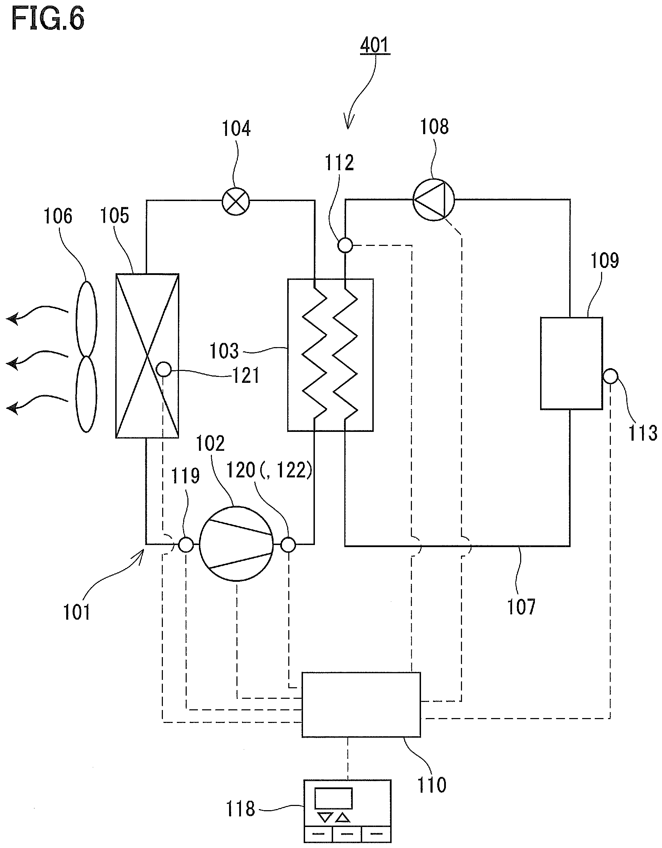

Fig. 6 is a configuration diagram of a heat pump heater according to a third modification. A heat pump heater 401 includes a suction temperature sensor 119, a discharge temperature sensor 120, and an evaporation temperature sensor 121. The suction temperature sensor 119 detects the temperature (suction temperature) of a refrigerant drawn into the compressor 102. The discharge temperature sensor 120 detects the temperature (discharge temperature) of the refrigerant discharged from the compressor 102. The evaporation temperature sensor 121 detects the temperature (evaporation temperature) of the refrigerant in the evaporator 105. Except for these, the third modification is the same as the embodiment described with reference to Fig. 1 to Fig. 3B.

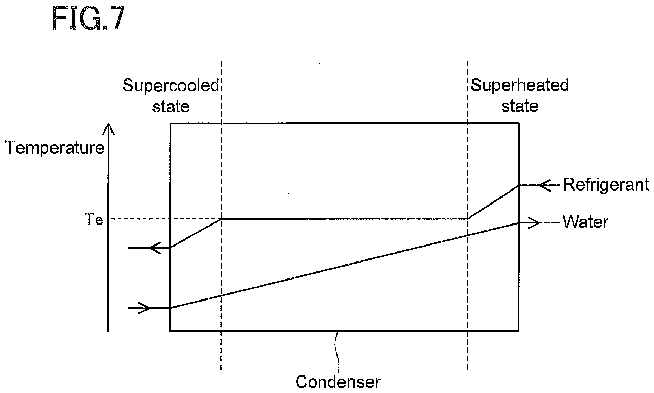

As shown in Fig. 7, in the case where the heat pump 101 operates at or below the critical pressure, the temperature of a refrigerant is maintained at approximately the condensation temperature Te in the radiator 103 (condenser). The water temperature is lowest at the inlet of the radiator 103 and highest at the outlet of the radiator 103. However, the water temperature never exceeds the refrigerant temperature. Since the quantity of heat of the refrigerant in a superheated state is relatively small, the water temperature at the outlet of the radiator 103, that is, the supply temperature shows a value close to the condensation temperature Te. Accordingly, the supply temperature can be estimated from the condensation temperature Te.

The difference between the supply temperature and the condensation temperature Te depends on the specifications of the radiator 103, the type of refrigerant, the water circulation rate, etc. Typically, the supply temperature is higher than the condensation temperature Te by several degrees centigrade. The controller 110 may be configured to identify the supply temperature from the condensation temperature Te by using a reference table, in which the correspondence relationship between the condensation temperature Te and the supply temperature is described, or an arithmetic expression.

According to the heat pump heater 401, the supply temperature can be estimated from the condensation temperature Te, which is estimated from the suction temperature, the discharge temperature and the evaporation temperature. Specifically, the pressure (suction pressure) of a refrigerant drawn into the compressor 102 is estimated from the evaporation temperature. The degree of superheat of the refrigerant drawn into the compressor 102 is obtained from the suction temperature. Thus, the state (the pressure and the degree of superheat) of the refrigerant drawn into the compressor 102 is identified. The pressure (discharge pressure) of the refrigerant discharged from the compressor 102 is estimated from the state of the drawn refrigerant, the discharge temperature, and the known adiabatic efficiency of the compressor 102. The condensation temperature Te is estimated from the discharge pressure, and then the supply temperature is estimated. When a discharge pressure sensor 122 for detecting the discharge pressure of the compressor 102 is used, the condensation temperature Te can be estimated without using the discharge temperature and the evaporation temperature.

The method for estimating the supply temperature should be selected appropriately according to the operation method of the heat pump 101. In the case where the expansion mechanism 104 (expansion valve) is controlled so that the refrigerant drawn into the compressor 102 is always in a superheated state, the above estimation method can be used. On the other hand, in the case where the expansion mechanism 104 is controlled so that the refrigerant drawn into the compressor 102 is in a gas-liquid two phase state to suppress the discharge temperature of the compressor 102, the condensation temperature Te cannot be estimated because the dryness of the refrigerant is unknown. The same is true in the case where a liquid refrigerant is injected into a working chamber of the compressor 102. In such a case, it is possible to estimate the supply temperature by providing a temperature sensor for detecting the condensation temperature Te, as described later.

Furthermore, the controller 110 may be configured to control the inverter pump 108 so that the temperature of the refrigerant discharged from the compressor 102 is maintained at an upper limit temperature when the temperature of the discharged refrigerant exceeds the upper limit temperature. Generally, the "upper limit temperature" depends on the heat resistance of the coating of a winding of a motor used in a compressor. When the temperature of the discharged refrigerant exceeds the upper limit temperature, the insulation of the winding may be destroyed, resulting in a short circuit of the motor. In addition, when the temperature of the discharged refrigerant rises too high, refrigerating machine oil may be degraded.

In the present modification, when the temperature of the discharged refrigerant exceeds the upper limit temperature, the controller 110 controls the inverter pump 108 to increase the water circulation rate. With this control, the refrigerant in a high pressure vapor state in the radiator 103 can be cooled sufficiently. In the case where the high pressure of the heat pump cycle is equal to or lower than the critical pressure, when the water circulation rate is increased, the liquefaction of the refrigerant is accelerated in the radiator 103. In the case where the high pressure of the heat pump cycle is equal to or higher than the critical pressure, when the water circulation rate is increased, the density of the refrigerant is increased, and thus the refrigerant is brought into an almost liquid phase. Then, the pressure of the refrigerant in the radiator 103 (= the pressure of the refrigerant discharged from the compressor 102) drops. When the pressure of the refrigerant discharged from the compressor 102 drops, the temperature of the discharged refrigerant also drops. As a result, the temperature of the discharged refrigerant is maintained at the upper limit temperature or drops below the upper limit temperature. With this control, the reliability of the heat pump heater 401 is enhanced.

According to the present modification, even when the heating output is increased, a rise in the return temperature can be suppressed while the supply temperature is maintained at or below the maximum supply temperature. Thereby, a rise in the refrigerant temperature at the outlet of the radiator 103 can be suppressed, and therefore the COP of the heat pump cycle is increased.

As shown in Fig. 6, the discharge pressure sensor 122 may be used instead of the discharge temperature sensor 120. As described above, the condensation temperature Te can be estimated from the discharge pressure. The supply temperature can be estimated from the condensation temperature Te. Furthermore, the controller 110 may be configured to control the inverter pump 108 so that the pressure of the refrigerant discharged from the compressor 102 is maintained at an upper limit pressure when the pressure of the discharged refrigerant exceeds the upper limit pressure. Specifically, when the pressure of the refrigerant discharged from the compressor 102 exceeds the upper limit pressure, the controller 110 controls the inverter pump 108 to increase the water circulation rate. With this control, the pressure of the discharged refrigerant is maintained at the upper limit pressure or drops below the upper limit pressure, and therefore the temperature of the discharged refrigerant also is maintained at the upper limit temperature or drops below the upper limit temperature. As a result, the reliability of the heat pump heater 401 is enhanced. The "upper limit pressure" is determined based on the withstand pressure of the least pressure resistant one (for example, the compressor 102 or the expansion valve 104) of the constituent components of the heat pump 101.

### (Fourth Modification)

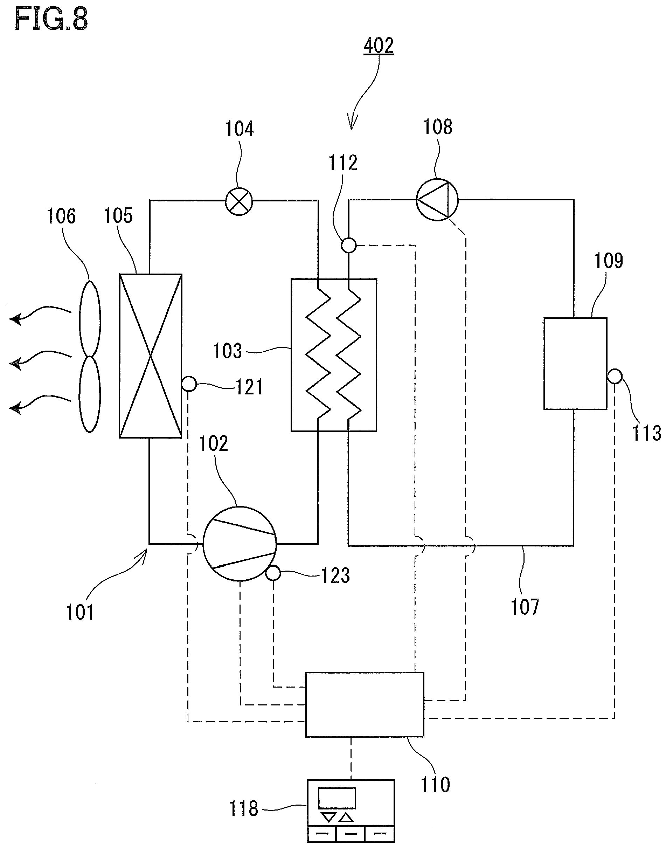

As shown in Fig. 8, a heat pump heater 402 according to a fourth modification includes a casing temperature sensor 123 for detecting the temperature of the closed casing of the compressor 102. The controller 110 may be configured to control the inverter pump 108 so that the temperature of the closed casing of the compressor 102 is maintained at an upper limit temperature when the temperature of the closed casing exceeds the upper limit temperature. Specifically, when the temperature of the closed casing of the compressor 102 exceeds the upper limit temperature, the controller 110 controls the inverter pump 108 to increase the water circulation rate. With this control, based on the theory described in the third modification, the temperature of the discharged refrigerant is maintained at the upper limit temperature or drops below the upper limit temperature, and thus the temperature of the closed casing also is maintained at the upper limit temperature or drops below the upper limit temperature. As a result, the reliability of the heat pump heater 402 is enhanced.

In the present description, the temperature sensors other than the casing temperature sensor 123 can be provided on the outer peripheral surface of refrigerant pipes or the outer peripheral surface of pipes. In contrast, the casing temperature sensor 123 can be provided on the outer peripheral surface of the closed casing of the compressor 102. Specifically, the casing temperature sensor 123 may be provided on the upper part of the closed casing. The heat capacity of the closed casing is larger than that of the discharge pipe of the compressor 102. The temperature of the closed casing is almost equal to that of the refrigerant discharged from the compressor 102, if the responsiveness is ignored.

### (Fifth Modification)

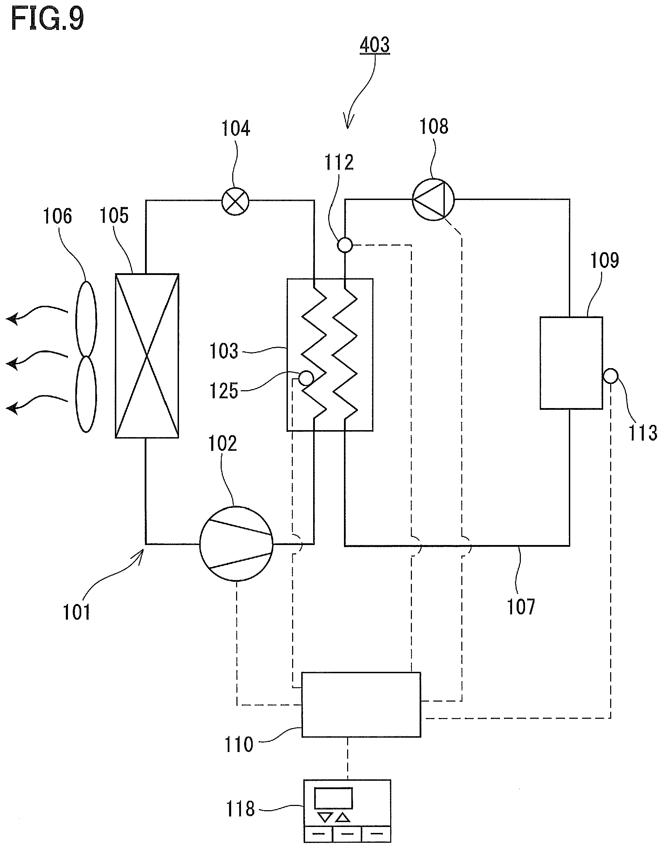

As shown in Fig. 9, a heat pump heater 403 according to a fifth modification includes a condensation temperature sensor 125 for detecting the condensation temperature Te of the refrigerant in the radiator 103 (condenser). As described in the third modification, the supply temperature can be estimated from the condensation temperature Te.

### EXAMPLES

The cycle obtained when the control of the present invention was performed was calculated by computer simulation. As a comparative example, the cycle obtained when the control described in JP 2001-124349 A was performed was calculated. The conditions used in the calculations are as follows.

### (Conditions common to Example 1 and Comparative Example 1)

Refrigerant: R410A
Minimum outside air temperature: -12°C
Heating start temperature: 18°C
Maximum heating output: 12 kW
Supply temperature at maximum heating output: 55°C
Return temperature at maximum heating output: 45°C
Outside air temperature at calculation: -5°C
Heating output at calculation: 9.2 kW

### (Conditions specific to Example 1)

Supply temperature: 55.0°C
Return temperature: 34.0°C

### (Conditions specific to Comparative Example 1)

Supply temperature: 48.3°C
Return temperature: 40.7°C

### (Conditions common to Example 2 and Comparative Example 2)

Refrigerant: CO₂
Minimum outside air temperature: -12°C
Heating start temperature: 18°C
Maximum heating output: 12 kW
Supply temperature at maximum heating output: 90°C
Return temperature at maximum heating output: 70°C
Outside air temperature at calculation: -5°C
Heating output at calculation: 9.2 kW

### (Conditions specific to Example 2)

Supply temperature: 90.0°C
Return temperature: 48.0°C

### (Conditions specific to Comparative Example 2)

Supply temperature: 76.7°C
Return temperature: 61.3°C

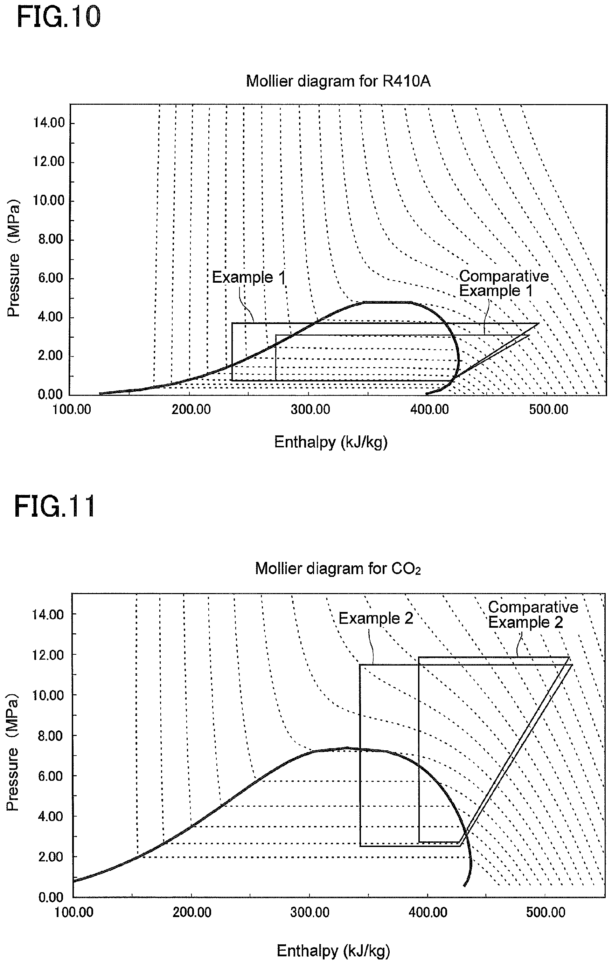

Fig. 10 shows the calculation results obtained when R410A was used, and Fig. 11 shows those obtained when CO₂ was used. As shown in Fig. 10 and Fig. 11, when the control of the present invention, that is, the control to prevent the return temperature from rising with a rise in the supply temperature is performed, the difference between the enthalpy at the inlet of the radiator and that at the outlet of the radiator increases. Specifically, the COP of the cycle shown in Example 1 was 3.45. The COP of the cycle shown in Example 2 was 1.89. In contrast, the COP of the cycle shown in Comparative Example 1 was 3.19. The COP of the cycle shown in Comparative Example 2 was 1.37.

### INDUSTRIAL APPLICABILITY

The heat pump heater of the present invention is useful as a hot water circulation type radiator heater, a hot water circulation type fan coil heater, etc.

## Claims

1. A method of operating a heat medium circulation type heat pump heater (100), wherein the heat medium circulation type heat pump heater (100) comprises:
a heat pump (101) having a compressor (102), a radiator (103), an expansion mechanism (104), and an evaporator (105);
a heat transfer circuit (107) in which a heat medium heated by the heat pump (101) circulates;
a heat utilization device (109) connected to the heat transfer circuit (107); and
a flow regulator (108) provided in the heat transfer circuit to change a circulation rate of the heat medium;
**characterized in that** the method comprises:
controlling the heat pump (101) to allow the heat utilization device (109) to produce a required heating output, and
controlling the flow regulator (108) to prevent a return temperature from rising with a rise in a supply temperature, the return temperature being a temperature of the heat medium returned from the heat transfer circuit to the heat pump (101), and the supply temperature being a temperature of the heat medium heated by the heat pump (101) and fed to the heat transfer circuit (107).

2. The method according to claim 1, further comprises controlling the flow regulator (108) so that a difference between the return temperature and a specific temperature falls within a predetermined range of temperature differences, the specific temperature being determined based on an ambient temperature of the heat utilization device (109).

3. The method according to claim 1 or 2, wherein when the supply temperature is lower than a predetermined maximum supply temperature, the method comprises controlling the flow regulator (108) so as to reduce the circulation rate.

4. The method according to claim 1 or 2, wherein when the supply temperature is lower than a predetermined maximum supply temperature, the method comprises preventing a drop in the return temperature by controlling the flow regulator (108) so as to increase the circulation rate.

5. The method according to any one of claims 1 to 4, wherein when the supply temperature is equal to or higher than a predetermined maximum supply temperature, the method comprises controlling the flow regulator to increase the circulation rate.

6. The method according to any one of claims 1 to 4, wherein when a temperature of a refrigerant discharged from the compressor exceeds an upper limit temperature, the method comprises controlling the flow regulator (108) to increase the circulation rate.

7. The method according to any one of claims 1 to 4, wherein when a pressure of a refrigerant discharged from the compressor exceeds an upper limit pressure, the controller controls the flow regulator (108) to increase the circulation rate.

8. The method according to any one of claims 1 to 4, wherein when a temperature of a closed casing of the compressor (102) exceeds an upper limit temperature, the method comprises controlling the flow regulator to increase the circulation rate.

9. The method according to any one of claims 1 to 8, wherein the flow regulator (108) is constituted by an inverter pump, and
the method further comprises increasing or reducing the circulation rate by adjusting a rotational speed of the inverter pump and thereby increasing or reducing a quantity of heat to be supplied to the heat utilization device (109).

10. The method according to any one of claims 1 to 8, wherein the flow regulator (108) is constituted by a constant rate pump and a flow control valve, and
increasing or reducing the circulation rate by adjusting an opening degree of the flow control valve and thereby increasing or reducing a quantity of heat to be supplied to the heat utilization device (109).

11. The method according to any one of claims 1 to 8, wherein the flow regulator (108) is constituted by a constant rate pump, a bypass circuit (115) connected to the heat transfer circuit (107) to bypass the constant rate pump, and a bypass valve provided in the bypass circuit, and
the method further comprises increasing or reducing the circulation rate by adjusting an opening degree of the bypass valve (116) and thereby increasing or reducing a quantity of heat to be supplied to the heat utilization device (109).

## Patentansprüche

1. Verfahren zum Betreiben einer Wärmemedium-Zirkulationswärmepumpenheizung (100), wobei die Wärmemedium-Zirkulationswärmepumpenheizung (100) Folgendes umfasst:
eine Wärmepumpe (101) mit einem Verdichter (102), einem Kühler (103), einem Expansionsmechanismus (104) und einem Verdampfer (105);
einen Wärmeübertragungskreislauf (107), in dem ein von der Wärmepumpe (101) erwärmtes Wärmemedium zirkuliert;
eine Wärmenutzungsvorrichtung (109), die mit dem Wärmeübertragungskreislauf (107) verbunden ist; und
einen Strömungsregler (108), der in dem Wärmeübertragungskreislauf vorgesehen ist, um eine Zirkulationsrate des Wärmemediums zu ändern;
**dadurch gekennzeichnet, dass** das Verfahren Folgendes umfasst:
Steuern der Wärmepumpe (101), um der Wärmenutzungsvorrichtung (109) zu ermöglichen, eine erforderliche Heizleistung zu erzeugen, und
Steuern des Strömungsreglers (108), um zu verhindern, dass eine Rücklauftemperatur mit einem Anstieg einer Vorlauftemperatur ansteigt, wobei die Rücklauftemperatur eine Temperatur des aus dem Wärmeübertragungskreislauf zur Wärmepumpe (101) zurückgeführten Wärmemediums ist, und die Vorlauftemperatur eine Temperatur des von der Wärmepumpe (101) erwärmten und dem Wärmeübertragungskreislauf (107) zugeführten Wärmemediums ist.

2. Verfahren nach Anspruch 1, ferner umfassend das Steuern des Strömungsreglers (108), so dass eine Differenz zwischen der Rücklauftemperatur und einer bestimmten Temperatur in einen vorgegebenen Bereich von Temperaturdifferenzen fällt, wobei die spezifische Temperatur basierend auf einer Umgebungstemperatur der Wärmenutzungsvorrichtung (109) bestimmt wird.

3. Verfahren nach Anspruch 1 oder 2, wobei, wenn die Vorlauftemperatur niedriger als eine vorgegebene maximale Vorlauftemperatur ist, das Verfahren das Steuern des Strömungsreglers (108) umfasst, um die Zirkulationsrate zu reduzieren.

4. Verfahren nach Anspruch 1 oder 2, wobei, wenn die Vorlauftemperatur niedriger als eine vorgegebene maximale Vorlauftemperatur ist, das Verfahren das Verhindern eines Absinkens der Rücklauftemperatur durch Steuern des Strömungsreglers (108) umfasst, um die Zirkulationsrate zu erhöhen.

5. Verfahren nach einem der Ansprüche 1 bis 4, worin, wenn die Vorlauftemperatur gleich oder höher als eine vorgegebene maximale Vorlauftemperatur ist, das Verfahren das Steuern des Strömungsreglers zum Erhöhen der Zirkulationsrate umfasst.

6. Verfahren nach einem der Ansprüche 1 bis 4, worin, wenn eine Temperatur eines aus dem Verdichter abgeleiteten Kältemittels eine obere Grenztemperatur überschreitet, das Verfahren das Steuern des Strömungsreglers (108) zum Erhöhen der Zirkulationsrate umfasst.

7. Verfahren nach einem der Ansprüche 1 bis 4, wobei, wenn ein Druck eines aus dem Verdichter abgegebenen Kältemittels einen oberen Grenzdruck überschreitet, die Steuerung den Strömungsregler (108) steuert, um die Zirkulationsrate zu erhöhen.

8. Verfahren nach einem der Ansprüche 1 bis 4, worin, wenn eine Temperatur eines geschlossenen Gehäuses des Verdichters (102) eine obere Grenztemperatur überschreitet, das Verfahren das Steuern des Strömungsreglers zum Erhöhen der Zirkulationsrate umfasst.

9. Verfahren nach einem der Ansprüche 1 bis 8, wobei der Strömungsregler (108) aus einer Inverter-Pumpe besteht, und
das Verfahren ferner das Erhöhen oder Reduzieren der Zirkulationsrate durch Einstellen einer Drehzahl der Inverter-Pumpe und dadurch das Erhöhen oder Reduzieren einer Wärmemenge, die der Wärmenutzungsvorrichtung (109) zuzuführen ist, umfasst.

10. Verfahren nach einem der Ansprüche 1 bis 8, wobei der Strömungsregler (108) aus einer Pumpe mit konstanter Fördermenge und einem Durchflussregelventil besteht, und
Erhöhen oder Reduzieren der Zirkulationsrate durch Einstellen eines Öffnungsgrades des Durchflussregelventils und dadurch Erhöhen oder Reduzieren einer Wärmemenge, die der Wärmenutzungsvorrichtung (109) zuzuführen ist.

11. Verfahren nach einem der Ansprüche 1 bis 8, wobei der Strömungsregler (108) aus Folgendem gebildet ist: einer Pumpe mit konstanter Fördermenge, einer Bypass-Schaltung (115), die mit dem Wärmeübertragungskreislauf (107) verbunden ist, um die Pumpe mit konstanter Fördermenge zu umgehen, und einem Bypass-Ventil, das in der Bypass-Schaltung vorgesehen ist, und
das Verfahren ferner das Erhöhen oder Reduzieren der Zirkulationsrate durch Einstellen eines Öffnungsgrades des Bypass-Ventils (116) und dadurch Erhöhen oder Reduzieren einer Wärmemenge, die der Wärmenutzungsvorrichtung (109) zuzuführen ist, umfasst.

## Revendications

1. Procédé de fonctionnement d'un appareil de chauffage à pompe à chaleur de type à circulation d'agent chauffant (100), dans lequel l'appareil de chauffage à pompe à chaleur de type à circulation d'agent chauffant (100) comprend :
une pompe à chaleur (101) ayant un compresseur (102), un radiateur (103), un mécanisme de dilatation (104), et un évaporateur (105) ;
un circuit de transfert de chaleur (107) dans lequel un agent chauffant chauffé par la pompe à chaleur (101) circule ;
un dispositif d'utilisation de chaleur (109) raccordé au circuit de transfert de chaleur (107) ; et
un régulateur d'écoulement (108) prévu dans le circuit de transfert de chaleur pour changer un débit de circulation de l'agent chauffant ;
**caractérisé en ce que** le procédé comprend :
la commande de la pompe à chaleur (101) pour permettre au dispositif d'utilisation de chaleur (109) de produire une puissance calorifique requise, et
la commande du régulateur d'écoulement (108) pour empêcher une température de retour d'augmenter avec une augmentation d'une température d'alimentation, la température de retour étant une température de l'agent chauffant renvoyé du circuit de transfert de chaleur à la pompe à chaleur (101), et la température d'alimentation étant une température de l'agent chauffant chauffé par la pompe à chaleur (101) et fourni au circuit de transfert de chaleur (107).

2. Procédé selon la revendication 1, comprend en outre la commande du régulateur d'écoulement (108) de sorte qu'une différence entre la température de retour et une température spécifique soit au sein d'une plage prédéterminée de différences de température, la température spécifique étant déterminée sur la base d'une température ambiante du dispositif d'utilisation de chaleur (109).

3. Procédé selon la revendication 1 ou 2, dans lequel, lorsque la température d'alimentation est inférieure à une température d'alimentation maximum prédéterminée, le procédé comprend la commande du régulateur d'écoulement (108) afin de réduire le débit de circulation.

4. Procédé selon la revendication 1 ou 2, dans lequel, lorsque la température d'alimentation est inférieure à une température d'alimentation maximum prédéterminée, le procédé comprend la prévention d'une chute de la température de retour par la commande du régulateur d'écoulement (108) afin d'augmenter le débit de circulation.

5. Procédé selon l'une quelconque des revendications 1 à 4, dans lequel, lorsque la température d'alimentation est égale ou supérieure à une température d'alimentation maximum prédéterminée, le procédé comprend la commande du régulateur d'écoulement pour augmenter le débit de circulation.

6. Procédé selon l'une quelconque des revendications 1 à 4, dans lequel, lorsqu'une température d'un réfrigérant évacué du compresseur dépasse une température de limite supérieure, le procédé comprend la commande du régulateur d'écoulement (108) pour augmenter le débit de circulation.

7. Procédé selon l'une quelconque des revendications 1 à 4, dans lequel, lorsqu'une pression d'un réfrigérant évacué du compresseur dépasse une pression de limite supérieure, le dispositif de commande commande le régulateur d'écoulement (108) pour augmenter le débit de circulation.

8. Procédé selon l'une quelconque des revendications 1 à 4, dans lequel, lorsqu'une température d'un boîtier fermé du compresseur (102) dépasse une température de limite supérieure, le procédé comprend la commande du régulateur d'écoulement pour augmenter le débit de circulation.

9. Procédé selon l'une quelconque des revendications 1 à 8, dans lequel le régulateur d'écoulement (108) est constitué d'une pompe inverseuse, et
le procédé comprend en outre l'augmentation ou la réduction du débit de circulation en ajustant une vitesse de rotation de la pompe inverseuse et en augmentant ou réduisant ainsi une quantité de chaleur destinée à être fournie au dispositif d'utilisation de chaleur (109).

10. Procédé selon l'une quelconque des revendications 1 à 8, dans lequel le régulateur d'écoulement (108) est constitué d'une pompe à débit constant et une soupape de commande d'écoulement, et
l'augmentation ou la réduction du débit de circulation en ajustant un degré d'ouverture de la soupape de commande d'écoulement et en augmentant ou réduisant ainsi une quantité de chaleur destinée à être fournie au dispositif d'utilisation de chaleur (109).

11. Procédé selon l'une quelconque des revendications 1 à 8, dans lequel le régulateur d'écoulement (108) est constitué d'une pompe à débit constant, d'un circuit de dérivation (115) raccordé au circuit de transfert de chaleur (107) pour contourner la pompe à débit constant, et d'une soupape de dérivation prévue dans le circuit de dérivation, et
le procédé comprend en outre l'augmentation ou la réduction du débit de circulation en ajustant un degré d'ouverture de la soupape de dérivation (116) et en augmentant ou réduisant ainsi une quantité de chaleur destinée à être fournie au dispositif d'utilisation de chaleur (109).
